(19) Europäisches Patentamt
European Patent Office
Office européen des brevets

(11) **EP 1 664 508 B1**

(12) **EUROPÄISCHE PATENTSCHRIFT**

(45) Veröffentlichungstag und Bekanntmachung des Hinweises auf die Patenterteilung:
**23.04.2008   Patentblatt 2008/17**

(21) Anmeldenummer: **04766442.0**

(22) Anmeldetag: **06.08.2004**

(51) Int Cl.:
*F02D 35/02* *(2006.01)*          *F02D 41/40* *(2006.01)*
*F02M 65/00* *(2006.01)*          *F02P 17/12* *(2006.01)*
*F02P 5/152* *(2006.01)*

(86) Internationale Anmeldenummer:
**PCT/EP2004/051738**

(87) Internationale Veröffentlichungsnummer:
**WO 2005/031137 (07.04.2005 Gazette 2005/14)**

(54) **VERFAHREN ZUR QUANTIFIZIERUNG EINER VOREINSPRITZUNG BEI EINEM KRAFTSTOFFEINSPRITZSYSTEM EINER BRENNKRAFTMASCHINE SOWIE VORRICHTUNG**

METHOD FOR QUANTIFYING A PRE-INJECTION IN A FUEL INJECTION SYSTEM OF A COMBUSTION ENGINE, AND DEVICE

PROCEDE DE QUANTIFICATION D'UNE PREINJECTION DANS LE SYSTEME D'INJECTION DE CARBURANT D'UN MOTEUR A COMBUSTION INTERNE ET DISPOSITIF CORRESPONDANT

(84) Benannte Vertragsstaaten:
**DE FR GB IT**

(30) Priorität: **17.09.2003   DE 10343069**

(43) Veröffentlichungstag der Anmeldung:
**07.06.2006   Patentblatt 2006/23**

(73) Patentinhaber: **SIEMENS AKTIENGESELLSCHAFT
80333 München (DE)**

(72) Erfinder:
• **BÖHNIG, Ralf
93049 Regensburg (DE)**
• **HIRN, Rainer
93073 Neutraubing (DE)**
• **SCHLEGL, Thomas
93055 Regensburg (DE)**
• **ZIMMER, Christian
93053 Regensburg (DE)**

(56) Entgegenhaltungen:
EP-A- 0 937 883          DE-C- 19 612 179
US-A- 4 704 999          US-A- 5 739 417

• **PATENT ABSTRACTS OF JAPAN Bd. 0124, Nr. 04 (M-757), 26. Oktober 1988 (1988-10-26) & JP 63 147956 A (NIPPON DENSO CO LTD; others: 01), 20. Juni 1988 (1988-06-20)**

EP 1 664 508 B1

**Beschreibung**

Die Erfindung geht von einem Verfahren zur Quantifizierung einer Voreinspritzung bei einem Kraftstoffeinspritzsystem einer Brennkraftmaschine aus, wobei ein Klopfsensor das bei der Verbrennung des Kraftstoff-Luftgemisches im Zylinder der Brennkraftmaschine entstehende Verbrennungsgeräusch erfasst und eine Auswerteeinheit dieses Geräusch filtert und analysiert, nach der Gattung der nebengeordneten Ansprüche 1 und 9. Es ist schon bekannt, dass bei einer Voreinspritzung, bei der eine sehr kleine Kraftstoffmenge, beispielsweise Diesel oder Benzin vor der eigentlichen Haupteinspritzung in den Zylinder der Brennkraftmaschine eingespritzt wird, eine exakte Bestimmung der eingespritzten Kraftstoffmenge kaum möglich ist.

Bisher wurde dieses Problem zum Beispiel dadurch gelöst, dass das Einspritzventil (Injektor) für eine bestimmte Zeitspanne angesteuert wurde, so dass dessen Einspritzventil so lange geöffnet wurde, bis die unter Druck stehende gewünschte Kraftstoffmenge ausgetreten ist. Dieses Verfahren arbeitet jedoch sehr unzuverlässig, da die eingespritzte Kraftstoffmenge beispielsweise von der Öffnungsdauer und der Öffnungsweite des Einspritzventils, von Druckschwankungen im Hochdrucksystem, von der Fließfähigkeit und der Temperatur des Kraftstoffs, vom Verschleiß der Düsennadel, von Toleranzen des Aktors, vom der Alterung und Langzeitdrift des Injektors usw. abhängt. Diese Faktoren sind nicht quantitativ erfassbar und können somit zu instabilen oder fehlerhaften Einspritzmengen bei der Voreinspritzung führen.

Es ist weiter bekannt, zum Beispiel aus US 5 739 417, dass zur Lösung dieser Probleme versucht wurde, mit Hilfe eines Klopfsensors das bei der Einspritzung und Zündung des Kraftstoff-Luftgemisches entstehende Verbrennungsgeräusch zu erfassen und zu analysieren. Allerdings ergibt sich hierbei das Problem, dass das Verbrennungsgeräusch nur während eines vorgegebenen, feststehenden Fensters erfasst werden kann, da die Lage und die Breite des Fensters in Bezug auf einen Kurbelwellen-Drehwinkel konstant gehalten wird. Der Einfluss, den wichtige Betriebsparameter wie die Drehzahl, das Lastmoment und/oder der Einspritzzeitpunkt auf das Verbrennungsgeräusch ausüben, konnte bei diesem Verfahren bisher nicht berücksichtigt werden.

Der Erfindung liegt die Aufgabe zugrunde, ein Verfahren beziehungsweise eine Vorrichtung anzugeben, bei dem die bei der Voreinspritzung abgesetzte Kraftstoffmenge besser quantifiziert werden kann. Diese Aufgabe wird mit den Merkmalen der nebengeordneten Ansprüche 1 und 9 gelöst.

Gegenüber dem bekannten Stand der Technik hat das erfindungsgemäße Verfahren zur Quantifizierung einer Voreinspritzung beziehungsweise die Vorrichtung mit den kennzeichnenden Merkmalen der nebengeordneten Ansprüche 1 und 9 den Vorteil, dass auch kleinste Einspritzmengen von Kraftstoff bei der Voreinspritzung zuverlässiger quantifiziert werden können. Das wird insbesondere dadurch erreicht, dass das zur Einspritzung gebildete Fenster zeitabhängig in Abhängigkeit von wenigstens einem Betriebsparameter bezüglich seiner Lage und/oder seiner Breite verschiebbar beziehungsweise veränderbar ausgebildet ist. Durch Berücksichtigung der aktuellen Betriebsparameter kann mit Hilfe eines geeigneten Algorithmus die voreingespritzte Kraftstoffmenge quantifiziert werden, so dass die Verbrennung des Kraftstoff-Luftgemisches im Zylinder der Brennkraftmaschine zuverlässiger gesteuert werden kann.

Durch die in den abhängigen Ansprüchen aufgeführten Maßnahmen sind vorteilhafte Weiterbildungen und Verbesserungen des in den nebengeordneten Ansprüche 1 und 9 angegebenen Verfahrens beziehungsweise der Vorrichtung gegeben. Als besonders vorteilhaft wird angesehen, dass die Fensterlage in Abhängigkeit von Betriebsparametern wie der Drehzahl, dem Lastmoment und/oder dem Einspritzbeginn variiert wird. Dieses erleichtert die Auswertung des aufgenommenen Verbrennungsgeräusches insbesondere im Hinblick auf die Bestimmung der Kraftstoffmenge bei der Voreinspritzung.

Durch die Filterung des Verbrennungsgeräusches mit Hilfe eines Bandpasses können vorteilhaft die mechanischen Geräusche zum großen Teil von den Resonanzfrequenzen im Brennraum getrennt werden.

Des weiteren wird als Vorteil angesehen, dass zunächst ein vom Raildruck abhängiges Basissignal für eine minimale Einspritzzeit gebildet wird, bei der die Düse des Einspritzventils noch nicht geöffnet hat und somit kein Kraftstoff in den Zylinder eingespritzt werden kann. Dieses Basissignal ist abhängig vom aktuellen Raildruck und ist somit besonders gut geeignet für einen späteren Vergleich mit einem weiteren Verbrennungsgeräuschsignal, bei dem bei der Voreinspritzung Kraftstoff eingespritzt wurde.

Durch die Differenzbildung zwischen dem Basissignal ohne Kraftstoffeinspritzung und dem weiteren Verbrennungsgeräuschsignal mit Kraftstoffeinspritzung sowie einer anschließenden Mittelwertbildung ergibt sich eine vorteilhafte Möglichkeit für die Beurteilung des analysierten Verbrennungsgeräusches.

Um eine zuverlässigere Aussagemöglichkeit für das analysierte Signal zu erhalten, werden statistische Verfahren angewendet. Beispielweise wird die Mittelwertbildung durch eine Reihe von Messungen und Analysen des Verbrennungsgeräusches wiederholt. Die so entstandene Vielzahl von Mittelwerten wird vorzugsweise zwischengespeichert und mit der statistischen Schiefe bewertet.

Als günstig wird weiterhin angesehen, die Bewertung der Mittelwerte in Aussageintervalle einzuteilen, die beispielsweise in Form einer Tabelle angeordnet sind. Insbesondere ist vorgesehen, die Aussageintervalle in Abhängigkeit von der Drehzahl, der Voreinspritzung und/oder dem Lastmoment auszubilden.

Nach einer derartigen Verteilung der Mittelwerte kann eine einfache Beurteilung der ermittelten Werte durchgeführt werden. Liegt keine oder nur eine geringe Streuung der Werte vor, hierbei wir vorzugsweise auch eine statistische Schieflage berücksichtigt, dann kann das Aussageintervall, in das die meisten Messwerte gefallen sind, zur Korrektur der Injektor- beziehungsweise der Aktorsteuerung herangezogen werden. In den anderen Fällen sind die Aussageintervalle zu verwerfen und neue Messungen durchzuführen.

Ein Ausführungsbeispiel der Erfindung ist in der Zeichnung dargestellt und wird in der nachfolgenden Beschreibung näher erläutert.

Figur 1    zeigt in schematischer Darstellung eine Anordnung für die Auswertung der aufgenommenen Verbrennungsgeräusche,

Figur 2    zeigt eine erste Tabelle mit Resonanzfrequenzen, die bei einem Zylinder für verschiedene Betriebspunkte ermittelt wurden,

Figur 3    zeigt ein Diagramm mit Frequenzspektren, die für verschiedene Einspritzungen gemessen wurden,

Figur 4    zeigt ein weiteres Diagramm, bei dem die Verteilungen der einzelnen Messwerte aufgetragen sind,

Figur 5    zeigt eine weitere Tabelle, in der die Entscheidungsergebnisse in Aussageintervalle eingetragen sind,

Figur 6    zeigt ein Histogramm für einen Messpunkt,

Figur 7    zeigt ein drittes Diagramm, bei dem verschiedene statistische Mittelwerte und die entsprechenden Werte für die Standardabweichung eingetragen sind und

Figur 8    zeigt in vereinfachter Darstellung ein Blockschaltbild für eine Vorrichtung zur Quantifizierung der Einspritzmenge.

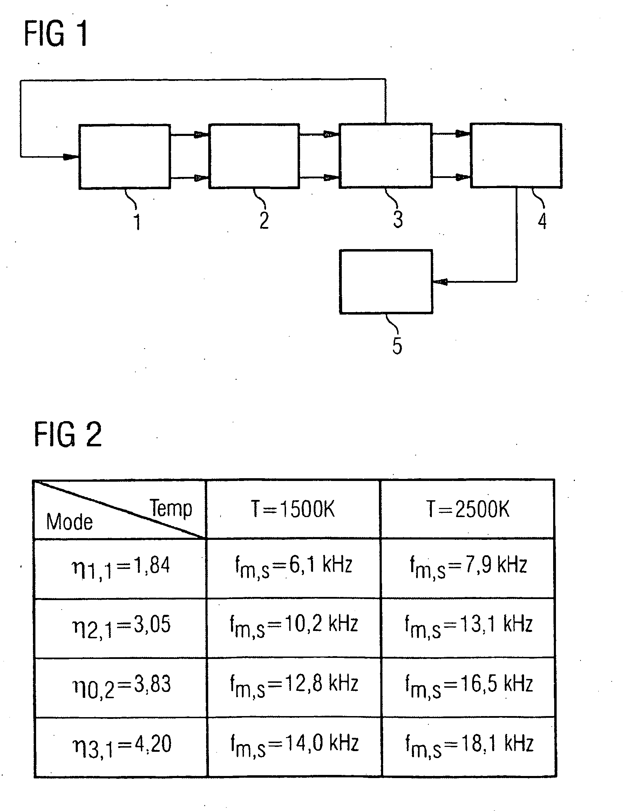

Das Blockschaltbild in Figur 1 zeigt in schematischer Darstellung einen Funktionsablauf, wie der Algorithmus für die Auswertung der vom Klopfsensor empfangenen Signale (Körperschallsignale) gebildet wird. Der Algorithmus ist in Form eines Programms (Softwareprogramm) ausgebildet und ist vorzugsweise Bestandteil eines Motormanagementsystems insbesondere für die Diesel- oder Benzineinspritzung.

Die vom Klopfsensor empfangenen Signale enthalten nicht nur die Verbrennungsgeräusche, die im Zylinder der Brennkraftmaschine durch die Verbrennung des eingespritzten Kraftstoff-Luftgemisches gebildet werden, sondern auch die mechanischen Geräusche, die durch die Bewegung des Kolbens, der Ventile, der Nockenwelle, der Kurbelwelle, der angeschlossenen Aggregate usw. entstehen. Im Block 1 werden zunächst nur die Signale ausgewertet, die innerhalb eines vorgegebenen zeitlichen Fensters empfangen werden, wobei dieses Fenster auf einen entsprechenden Bereich für den Kurbelwellenwinkel der Brennkraftmaschine bezogen ist. Alle außerhalb des Fensters liegende Signale werden unterdrückt.

Da innerhalb des Fensters die Voreinspritzung zeitabhängig erfolgt, wobei die Zündung der Voreinspritzung idealerweise innerhalb des Zeitfensters liegt, ändert sich auch die Fensterlage und seine Breite in Abhängigkeit von relevanten Betriebsparametern zeitabhängig. Wesentliche Betriebsparameter sind beispielsweise die Drehzahl N, der Einspritzbeginn SOI (Start of Injection) und/oder das indizierte Lastmoment TQI (Torque indicated), da die Verbrennung im wesentlichen von diesen Parametern gesteuert wird. Die Voreinspritzung erfolgt mit kleinsten Kraftstoffmengen und engen Spritzabständen drehzahlabhängig, je nach System beispielsweise im Bereich 20°...-10° Kurbelwellenwinkel vor OT (oberer Totpunkt).

Im Block 1 erfolgt eine AA-Filterung der Signale (Anti Aliasing) und anschließend wird das Signal über einen Bandpass geleitet. Durch die Bandpassfilterung wird ein Großteil der mechanischen Geräusche von den Verbrennungsgeräuschen getrennt. Diese Filterung erfolgt sowohl mit einem Ansteuerimpuls, bei dem bei der Voreinspritzung durch eine sehr kurze Ansteuerzeit des Einspritzventils noch kein Kraftstoff eingespritzt wurde als auch mit einem längeren Ansteuerimpuls, bei dem Kraftstoff eingespritzt wurde. Diese Vorgänge werden mehrfach wiederholt, so dass für die spätere Auswertung durch statistische Auswerteverfahren die Zuverlässigkeit der Messwerte verbessert werden kann. Vorzugsweise wird eine Multibandfilterung zur gezielten Extraktion der Brennraumresonanzfrequenzen durchgeführt. In einem Spezialfall wird nur ein Filterband für alle signifikanten Brennraumresonanzfrequenzen verwendet.

Die beiden gefilterten Signale werden auf einen Block 2 geleitet. Hier wird die Signalenergie aller in einer Messperiode ermittelten Signale sowie deren Energiedifferenz berechnet. Im Block 3 erfolgt eine statistische Auswertung von gebildeten Mittelwerten. Die Ergebnisse bilden üblicherweise eine Normalverteilung, die entsprechend ausgewertet wird. Ist auf Grund der Verteilung jedoch keine klare Entscheidung möglich, dann springt das Programm auf den Eingang von Block 1 zurück und die Messungen werden wiederholt. Im anderen Fall erfolgt im Block 4 eine Bewertung der Messwerte. Dazu werden die Messwerte beziehungsweise die daraus ermittelten Mittelwerte in entsprechende Aussageintervalle eingeteilt und gewichtet. Als Bewertungskriterien sind vier Gruppen vorgesehen: Die Voreinspritzung ist in Ordnung, es erfolgte keine Voreinspritzung, die Voreinspritzung war zu niedrig oder die Voreinspritzung war zu hoch. Je nach der getroffenen Entscheidung erfolgt im Block 5, der das Programm für die Einspritzsteuerung enthält, eine entsprechende Korrektur der Voreinspritzung.

Nachfolgend wird an Hand der Figuren 2 bis 7 der zuvor beschriebene Ablauf detailliert erläutert.

Figur 2 zeigt eine Tabelle, in der Resonanzfrequenzen in Abhängigkeit von den Moden dargestellt sind. Das gefilterte Verbrennungsgeräusch entsteht im Zylinder durch Longitudinal- und Transversalwellen, die sich unterschiedlich ausbreiten und entsprechende Resonanzfrequenzen aufweisen. Die Berechnung der Resonanzfrequenzen erfolgt nach der bekannten Bessel-Funktion:

$$f_{m,s} = \frac{c_0}{2\pi R} \sqrt{\frac{T}{273 K}} \eta_{m,s}$$

Die Besselfunktion m-ter Ordnung stellt eine Lösung für die aus der Wellengleichung für Hohlzylinder gewonnene Differenzialgleichung dar. Dabei ist $f_{m,s}$ die Resonanzfrequenz, $\eta_{m,s}$ sind die Moden an der s-ten Nullstelle der Ableitung der Bessel-Funktion m-ter Ordnung erster Art. $C_o$ ist die Schallgeschwindigkeit im Zylinder, T ist die Temperatur im Zylinder in Kelvin K und R ist der Durchmesser des Zylinders.

Die Tabelle gemäß Figur 2 zeigt für verschiedene Moden $\eta_{m,s}$ die Resonanzfrequenzen $f_{m,s}$, die für die Temperatur T = 1500K und T = 2500K berechnet wurden. Zum Beispiel sind der mittleren Spalte für $\eta_{1,1}$ = 1,84 die Resonanzfrequenz $f_{m,s}$ = 6,1 KHz und entsprechend für die übrigen Moden die Resonanzfrequenzen $f_{m,s}$ = 10,2 KHz, 12,8 KHz und 14,0 KHz entnehmbar. Bei T = 2500 K sind in Figur 2 die entsprechenden Resonanzfrequenzen in der rechten Spalte eingetragen.

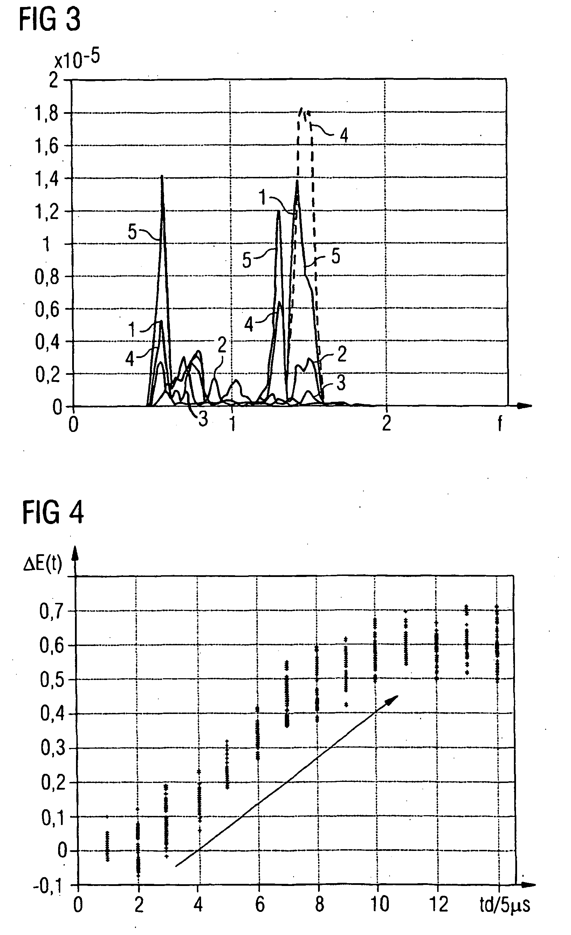

Figur 3 zeigt ein weiteres Diagramm, in das mehrere Frequenzkurven eingetragen wurden, die an einen Testmotor gemessen und im Frequenzbereich 5,2... 19 KHz gefiltert wurden. Jede Kurve entspricht einer bestimmten, vorgegebenen Einspritzmenge bei der Voreinspritzung. Bei der Kurve 1 erfolgte keine Einspritzung, d.h. $m_{fprev}$ = 0mg. Diese Kurve entspricht praktisch dem Geräusch, das durch das Einspritzventil mit seinen beweglichen Teilen erzeugt wird. Bei der Kurve 2 entspricht die Einspritzmenge $m_{fprev}$ = 0,2mg, bei der Kurve 3 entspricht die Einspritzmenge $m_{fprev}$ = 0,8mg, bei der Kurve 4 entspricht die Einspritzmenge $m_{fprev}$ = 1,5mg und bei der Kurve 5 entspricht die Einspritzmenge $m_{fprev}$ = 2,3mg. Diese Kurven sind über mehrere Messungen ermittelte Spektren und entsprechen der mittleren Spalte der Tabelle in Figur 2, wie sie für die Resonanzfrequenzen bei T = 1500 K ermittelt wurden.

Figur 4 zeigt ein weiteres Diagramm, in das beispielhaft 60 nachfolgende Messwerte (Zyklen) erfasst und ausgewertet wurden. Dabei entfallen jeweils 30 Messwerte auf das Referenzsignal ohne Einspritzung (Basissignal) und 30 Messwerte mit Einspritzung. Es sind jeweils 30 Differenzwerte (Signalenergiedifferenz im Zeitfenster) für ansteigende Einspritzdauern aufgetragen. Die Messwerte wurden bei einer Drehzahl N = 1500 rpm und bei einem Raildruck von 800 bar aufgenommen.

Auf der x-Achse wurde die Einspritzdauer td in Schritten von jeweils 5μs erhöht. Der Anfangswert liegt bei 130μs, bei dem keine Einspritzung erfolgt. Er gilt als Basiswert. Auf der y-Achse ist eine berechnete Energiedifferenz ΔE(t) in Schritten von 0,1 aufgetragen, die sich aus jeweils einem Messwert abzüglich des nachfolgend gemessenen Basiswertes bestimmen lässt. Die Differenz entspricht dann genau dem Signalanteil, der durch die reine Verbrennung zu Stande kommt. Mechanische Geräusche, insbesondere das Geräusch des Injektors werden dadurch ausgeblendet.

Die Energie E(t) innerhalb des Zeitfensters wurde nach folgender Gleichung berechnet:

$$\mathtt{E(t) \ = \ 1/v2*|f(t)|^2,}$$

wobei f(t) die Resonanzfrequenz ist.

Wie in Figur 4 dem Diagramm entnehmbar ist, ist die Energiedifferenz ΔE(t) und damit die Einspritzmenge bei kleinen Einspritzzeiten (Schritt 0...3) zunächst gering. Sie steigt mit zunehmender Einspritzdauer an, bis sie ab etwa 10 Schritten horizontal verläuft. Bei jedem Schritt sind beispielhaft 30 Werte aufgetragen, deren Mittelwerte und Streuwerte gut erkennbar sind. Tm linken Teil der Kurve ist die Einspritzmenge gering, während sie im rechten Teil zu hoch ist. Im mittleren Teil ist die Einspritzmenge in Ordnung.

Jeweils 30 Werte stellen den Energielevel für einen Betriebspunkt dar. Für die Mengenbestimmung wird nun so vorgegangen, dass eine einzuspritzende Kraftstoffmenge vorgegeben wird und anschließend wird geprüft, ob die vorgegebene Kraftstoffmenge erreicht wurde. Dabei wird die Energiedifferenz auf der Y-Achse für alle Mittelwerte betrachtet, die im Bereich 0,5 beziehungsweise für die Streuwerte zwischen 0,45...0,55 liegen. Liegt der Mittelwert bei 0,5, wie hier beim Schritt 8, dann war die Einspritzung in Ordnung.

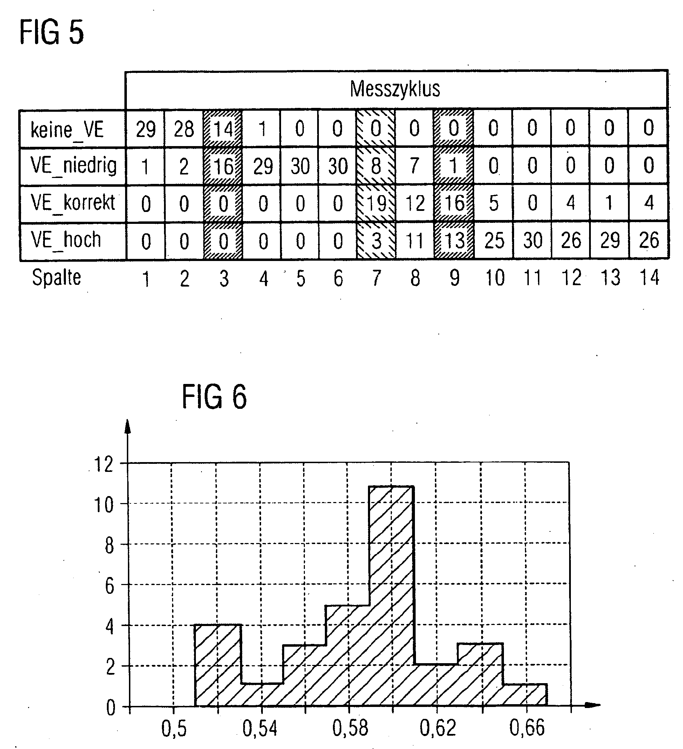

Figur 5 zeigt eine Tabelle, in der die einzelnen Entscheidungsergebnisse der Energiedifferenzwerte in Spalten 1...14 einklassifiziert werden. Die Spalten bilden die Aussageintervalle, mit denen anschließend eine Bewertung mit der statistischen Schiefe durchgeführt werden kann. In die Spalten sind - ähnlich wie bei der Verteilung der Werte in Figur 4 - die Energiedifferenzwerte der einzelnen Messungen, in unserem Beispiel 30 Messzyklen pro Einspritzmenge eingetragen. In die Spalte 1 (1. Aussageintervall) sind die Werte für die erste Ventil-Ansteuerzeit 130 μs eingetragen, bei der das Ventil noch nicht geöffnet hat und somit noch kein Kraftstoff eingespritzt wird. Bei den nachfolgenden Spalten wurde die Ventil-Ansteuerzeit jeweils um 5 μs erhöht, so dass zunehmend mehr Kraftstoff eingespritzt wird. Diese Aussageintervalle sind abhängig von der Drehzahl N, dem Lastmoment TQI und/oder der Voreinspritzung MF_PREV. Die Zeilen der Tabelle bilden folgende vier Gruppen: Keine VE, VE niedrig, VE korrekt und VE hoch. VE steht für Voreinspritzung.

Mit der statistischen Schiefe wird überprüft, ob die Verteilung über den Aussageintervallen einen eindeutigen Mittelwert hat. Es sollen also ebenso viele Messwerte in das Aussageintervall über dem mit den meisten Ergebniswerten fallen wie in das Aussageintervall, das unter diesem liegt, um eine Normal-Verteilung zu erhalten. Ist das nicht der Fall, dann wird die Messung verworfen. Wird eine Messreihe schließlich als brauchbar angenommen, dann wird nicht ein arithmetisches Mittel als Aussage verwendet, sondern die Aussage des Intervalls, in das die meisten Messergebnisse gefallen sind. Diese Aussage wird dann für die Steuerung der Voreinspritzung verwendet. Beispielsweise ist bei den grau unterlegten Feldern keine eindeutige vertrauenswürdige Aussage über den Mittelwerten möglich, da in der Spalte 3 mit den Werten 14,16,0,0 oder in der Spalte 9 mit den Werten 0,1,16,13 zu viele Messwerte in die anderen Bereiche fallen. Brauchbar sind die weißen Felder und das schraffierte Feld. Beispielsweise fallen in die Spalten 4 bis 6 jeweils 29, 30 und 30 Werte. Bei diesen Ergebnissen ist die Wahrscheinlichkeit sehr groß, dass diese Werte zuverlässig sind. Ähnliches gilt für die Spalten 10 bis 14, bei denen die VE hoch ist. Bei der schraffierten Spalte 7 kann VE korrekt angenommen werden.

Figur 6 zeigt ein Verfahren zur statistischen Auswertung, mit dem die Vertrauenswürdigkeit der Mittelwerte überprüft wird. Hier wurden die Mittelwerte der Messzyklen eingetragen, die bei den verschiedenen Einspritzmengen entsprechend der Figuren 4 und 5 aufgenommen wurden. Mit Hilfe eines Lilliefors-Tests wird geprüft, ob eine Normalverteilung vorliegt. Der Lilliefors-Test vergleicht die normierte Häufigkeitsverteilung mit einer Normalverteilung und überprüft, ob die Abweichung innerhalb der vorgegebenen Begrenzung liegt. Dazu trägt man die Wahrscheinlichkeitsfunktion einer Standard Normalverteilung $F^*(x)$ und die Häufigkeitsverteilung der Stichprobe $S(x)$ in ein Schaubild ein. Die Testgröße Ti ist dann der maximale vertikal Abstand der beiden Kurven, der nicht überschritten werden darf. Rechnerisch kann das Ergebnis auch mit der Formel ermittelt werden:

$$T_i = \sup(F^*(x) - S(x))$$

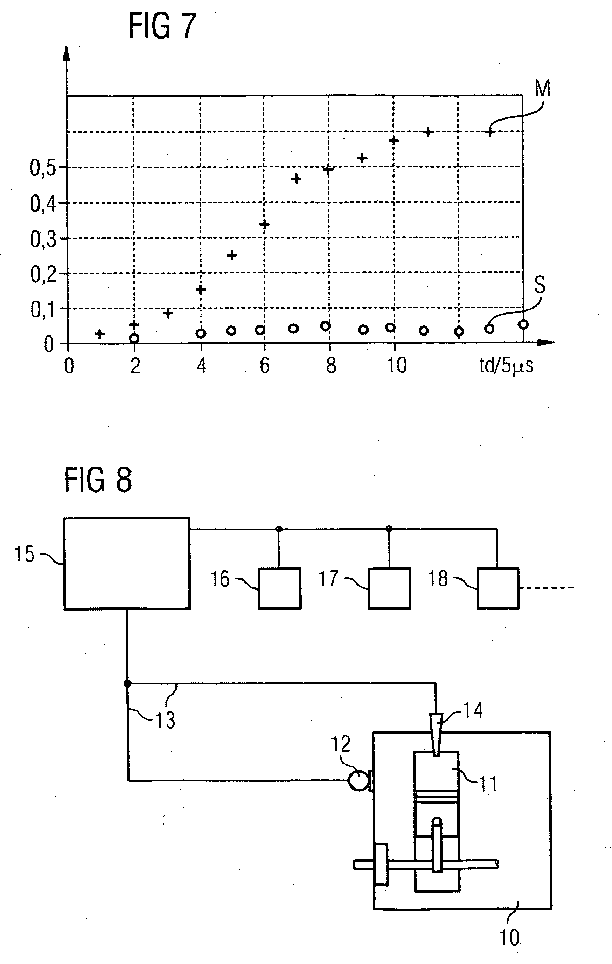

Figur 7 zeigt ein weiteres Diagramm, bei dem die obere Kurve die Mittelwerte M der einzelnen Messzyklen und die untere Kurve die Standardabweichung S angibt, die für zunehmende Öffnungszeiten des Einspritzventils entsprechend Figur 4 ermittelt wurden. Wie der oberen Kurve entnehmbar ist, steigen mit zunehmender Ventil-Ansteuerzeiten entsprechend der Schrittweite td (Figur 4) die Mittelwerte M und damit die Einspritzmengen an. Die Standardabweichung S verbleibt in vorteilhafter Weise auf einem niedrigen Niveau und ändert sich fast nicht. Das bedeutet, dass die Mittelwerte vertrauenswürdig sind und für die Steuerung der Einspritzung verwendet werden können.

Figur 8 zeigt in schematischer Darstellung ein Blockschaltbild für eine Vorrichtung zur Quantifizierung der Einspritzmenge. Eine Auswerteeinheit 15 ist mit einem Programmspeicher 16, einem Datenspeicher 17, einer Filtereinheit 18 usw. verbunden. Des weiteren ist die Auswerteeinheit 15 vorzugsweise über einen Daten- und Steuerbus 13 mit einem Klopfsensor 12 und einem Einspritzventil (Injektor) 14 verbunden. Der Klopfsensor 12 ist an einer geeigneten Stelle einer Brennkraftmaschine 10 angeordnet, um die Verbrennungssignale aufzunehmen. Das Einspritzventil 14 ragt mit seiner Düsenspitze in einen Zylinder 11 der Brennkraftmaschine 10. Als Brennkraftmaschine 10 kann ein Benzin- oder Dieselmotor mit Direkteinspritzung verwendet werden.

**Patentansprüche**

**1.** Verfahren zur Quantifizierung einer Voreinspritzung bei einem Kraftstoffeinspritzsystem einer Brennkraftmaschine (10), wobei ein Klopfsensor (12) das bei der Verbrennung des Kraftstoff-Luftgemisches im Zylinder (11) der Brennkraftmaschine (10) entstehende Verbrennungsgeräusch erfasst und eine Auswerteeinheit (15) dieses Geräusch filtert und analysiert, **dadurch gekennzeichnet, dass** das Verbrennungsgeräusch in einem Zeitfenster erfasst wird, dessen Lage und/oder Breite in Bezug auf den Drehwinkel der Kurbelwelle der Brennkraftmaschine (10) zeitabhängig in Abhängigkeit von wenigstens einem Betriebsparameter veränderbar ausgebildet ist und dass ein Algorithmus gebildet wird, mit dessen Hilfe aus dem analysierten Verbrennungsgeräusch die bei der Voreinspritzung abgesetzte Kraftstoffmenge quantifiziert wird.

**2.** Verfahren nach Anspruch 1, **dadurch gekennzeichnet, dass** die Fensterlage in Abhängigkeit von der Drehzahl (N), dem Einspritzbeginn (SOI) und/oder dem ermittelten Lastmoment (TQI) variiert wird.

**3.** Verfahren nach einem der vorhergehenden Ansprüche, **dadurch gekennzeichnet, dass** das Verbrennungsgeräusch mittels einer Filtereinheit (18), vorzugsweise einem Bandpass gefiltert wird.

**4.** Verfahren nach einem der vorhergehenden Ansprüche, **dadurch gekennzeichnet, dass** ein vom Raildruck abhängiges Basissignal (BS) für eine minimale Einspritzzeit gebildet wird, bei der noch keine Kraftstoffeinspritzung erfolgt.

**5.** Verfahren nach einem der vorhergehenden Ansprüche, **dadurch gekennzeichnet, dass** aus dem Basissignal und einem weiteren Verbrennungsgeräuschsignal mit Kraftstoffeinspritzung ein Differenzsignal ($\Delta E(t)$) gebildet und daraus ein Mittelwert (M) bestimmt wird.

**6.** Verfahren nach einem der Ansprüche 4 oder 5, **dadurch gekennzeichnet, dass** durch Wiederholung des Vorgangs weitere Mittelwerte (M) gebildet werden und dass die Mittelwerte (M) mit einer statistischen Schiefe bewertet werden.

**7.** Verfahren nach Anspruch 6, **dadurch gekennzeichnet, dass** die bewerteten Mittelwerte (M) in Aussageintervalle einklassifiziert werden, die von der Drehzahl (N), der Voreinspritzung (MF_PREV) und/oder dem Lastmoment (TQI) abhängig sind.

**8.** Verfahren nach einem der vorhergehenden Ansprüche, **dadurch gekennzeichnet, dass** zur Beurteilung der voreingespritzten Kraftstoffmenge das Intervall verwendet wird, in das die meisten Messergebnisse gefallen sind.

**9.** Vorrichtung zur Quantifizierung einer Voreinspritzung bei einem Kraftstoffeinspritzsystem einer Brennkraftmaschine (10), mit einem Klopfsensor (12) und mit einer Auswerteeinheit (15) für das erfasste Verbrennungsgeräusch nach einem der vorhergehenden Ansprüche, **dadurch gekennzeichnet, dass** die Auswerteeinheit (15) ein Programm mit einem Algorithmus aufweist und dass der Algorithmus ausgebildet ist, aus wiederholt erfassen Verbrennungsgeräuschen Mittelwerte (M) zu bilden und diese in Aussageintervalle einzuteilen.

**10.** Vorrichtung nach Anspruch 9, **dadurch gekennzeichnet, dass** das Aussageintervall mit den häufigsten Messwerten zur Steuerung des Einspritzventils (14) verwendbar ist.

**Claims**

**1.** Method for quantifying a pre-injection in a fuel injection system of an internal combustion engine (10), with a knock sensor (12) detecting the combustion noise produced during combustion of the air/fuel mixture in the cylinder (11) of the internal combustion engine (10) and an evaluation unit (15) filtering and analysing this noise, **characterised in that** the combustion noise is detected in a time frame, the position and/or width of which is designed to be changeable in a time-dependent manner in respect of the angle of rotation of the crankshaft of the internal combustion engine (10) as a function of at least one operating parameter and that an algorithm is formed, with the aid of which the quantity of fuel deposited during the pre-injection is quantified from the analysed combustion noise.

**2.** Method according to claim 1, **characterised in that** the time frame position is varied as a function of the number of revolutions (N), the start of injection (SOI) and/or the determined load torque (TQI).

**3.** Method according to one of the preceding claims, **characterised in that** the combustion noise is filtered by means of a filter unit (18), preferably a bandpass filter.

**4.** Method according to one of the preceding claims, **characterised in that** a base signal (BS) which is dependent on the rail pressure is formed for a minimum injection time, in which no fuel injection is yet carried out.

**5.** Method according to one of the preceding claims, **characterised in that** a difference signal ($\Delta E(t)$) is formed from the base signal and a further combustion noise signal with fuel injection and a mean value (M) is determined therefrom.

**6.** Method according to one of claims 4 or 5, **characterised in that** by repeating the process, further mean values (M) are formed and that the mean values (M) are evaluated with statistical skewness.

**7.** Method according to claim 6, **characterised in that** the evaluated mean values (M) are classified in statement intervals, which are dependent on the number of revolutions (N), the start of injection (MF_PREV) and/or the load torque (TQI).

**8.** Method according to one of the preceding claims, **characterised in that** the interval, in which most measurement results were reduced, is used to assess the quantity of fuel pre-injected.

**9.** Device for quantifying a pre-injection in a fuel injection system of an internal combustion engine (10), having a knock sensor (12) and an evaluation unit (15) for the detected combustion noise according to one of the preceding claims, **characterised in that** the evaluation unit (15) has a program with an algorithm and that the algorithm is designed so as to form mean values (M) from repeatedly detected combustion noises and to divide these into statement intervals.

**10.** Device according to claim 9, **characterised in that** the statement interval with the most frequent measured values can be used to control the injection valve (14).

**Revendications**

1. Procédé de quantification d'une préinjection pour un système d'injection de carburant d'un moteur à combustion interne (10), un capteur de cognement (12) détectant les bruits de combustion apparaissant lors de la combustion du mélange air-carburant dans le cylindre (11) du moteur à combustion interne (10) et une unité d'évaluation (15) filtrant et analysant ces bruits, **caractérisé en ce que** les bruits de combustion sont détectés dans une fenêtre de temps, dont la position et/ou la largeur est réalisée de manière modifiable en fonction du temps par rapport à l'angle de rotation du vilebrequin du moteur à combustion interne (10) en fonction d'au moins un paramètre d'exploitation et **en ce qu'**un algorithme est formé, à l'aide duquel la quantité de carburant retirée lors de la préinjection est quantifiée à partir des bruits de combustion analysés.

2. Procédé selon la revendication 1, **caractérisé en ce que** la position de la fenêtre varie en fonction de la vitesse de rotation (N), du début de l'injection (SOI) et/ou du couple de charge (TQI) déterminé.

3. Procédé selon l'une quelconque des revendications précédentes, **caractérisé en ce que** les bruits de combustion sont filtrés au moyen d'une unité de filtrage (18), de préférence d'un filtre bande-passe.

4. Procédé selon l'une quelconque des revendications précédentes, **caractérisé en ce qu'**un signal de base (BS) dépendant de la pression de la rampe est formé pour une durée d'injection minimale, pour laquelle aucune injection de carburant n'est encore effectuée.

5. Procédé selon l'une quelconque des revendications précédentes, **caractérisé en ce qu'**à partir du signal de base et d'un autre signal de bruits de combustion avec injection de carburant, un signal différentiel ($\Delta E(t)$) est formé et une valeur moyenne (M) est déterminée à partir de celui-ci.

6. Procédé selon l'une quelconque des revendications 4 ou 5, **caractérisé en ce que** grâce à la répétition du processus, d'autres valeurs moyennes (M) sont formées et **en ce que** les valeurs moyennes (M) sont évaluées à l'aide d'une dissymétrie statistique.

7. Procédé selon la revendication 6, **caractérisé en ce que** les valeurs moyennes (M) évaluées sont classifiées dans des intervalles d'informations qui dépendent de la vitesse de rotation (N), de la préinjection (MF_PREV) et/ou du couple de charge (TQI).

8. Procédé selon l'une quelconque des revendications précédentes, **caractérisé en ce que** pour évaluer la quantité de carburant préinjectée, l'intervalle est utilisé, dans lequel se trouvent la plupart des résultats de mesure.

9. Dispositif de quantification d'une préinjection pour un système d'injection de carburant d'un moteur à combustion interne (10), avec un capteur de cognement (12) et avec une unité d'évaluation (15) pour les bruits de combustion détectés selon l'une quelconque des revendications précédentes, **caractérisé en ce que** l'unité d'évaluation (15) présente un programme avec un algorithme et **en ce que** l'algorithme est réalisé afin de former des valeurs moyennes (M) à partir de bruits de combustion détectés de façon répétée et de les répartir dans des intervalles d'informations.

10. Dispositif selon la revendication 9, **caractérisé en ce que** l'intervalle d'information peut être utilisé avec les valeurs de mesure les plus fréquentes pour la commande de la soupape d'injection (14).

## FIG 1

## FIG 2

| Mode \ Temp | T=1500K | T=2500K |
|---|---|---|
| $\eta_{1,1}=1{,}84$ | $f_{m,s}=6{,}1$ kHz | $f_{m,s}=7{,}9$ kHz |
| $\eta_{2,1}=3{,}05$ | $f_{m,s}=10{,}2$ kHz | $f_{m,s}=13{,}1$ kHz |
| $\eta_{0,2}=3{,}83$ | $f_{m,s}=12{,}8$ kHz | $f_{m,s}=16{,}5$ kHz |
| $\eta_{3,1}=4{,}20$ | $f_{m,s}=14{,}0$ kHz | $f_{m,s}=18{,}1$ kHz |

# FIG 3

# FIG 4

## FIG 5

| | Messzyklus | | | | | | | | | | | | | |
|---|---|---|---|---|---|---|---|---|---|---|---|---|---|---|
| keine_VE | 29 | 28 | 14 | 1 | 0 | 0 | 0 | 0 | 0 | 0 | 0 | 0 | 0 | 0 |
| VE_niedrig | 1 | 2 | 16 | 29 | 30 | 30 | 8 | 7 | 1 | 0 | 0 | 0 | 0 | 0 |
| VE_korrekt | 0 | 0 | 0 | 0 | 0 | 0 | 19 | 12 | 16 | 5 | 0 | 4 | 1 | 4 |
| VE_hoch | 0 | 0 | 0 | 0 | 0 | 0 | 3 | 11 | 13 | 25 | 30 | 26 | 29 | 26 |
| Spalte | 1 | 2 | 3 | 4 | 5 | 6 | 7 | 8 | 9 | 10 | 11 | 12 | 13 | 14 |

## FIG 6

## FIG 7

## FIG 8

**EP 1 664 508 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5739417 A